# EUROPÄISCHE PATENTANMELDUNG

(11) **EP 1 486 654 A2**
(43) Veröffentlichungstag der Anmeldung: **15.12.2004**
(21) Anmeldenummer: 04012841.5
(22) Anmeldetag: 29.05.2004
(51) Int. Cl.: F02C 9/00, F02C 7/32

(54) **Gasturbine und Anbaugerät für eine Gasturbine**

(30) Priorität: 12.06.2003 DE 10326532
(71) Anmelder: MTU Aero Engines GmbH, 80995 München (DE)
(72) Erfinder: Götz, Werner, 85101 Lenting (DE); Herrmann, Hubert, 85778 Haimhausen (DE)
(74) Vertreter: Brückner, Ingo Andreas

(57) **Zusammenfassung**

Die Erfindung betrifft eine Gasturbine, insbesondere ein Flugzeugtriebwerk.

An der Gasturbine ist mindestens ein Anbaugerät (14) befestigt, wobei das oder jedes Anbaugerät (14) von mindestens einer Baugruppe der Gasturbine Signale, insbesondere Messsignale, empfängt, die Signale verarbeitet und Signale, insbesondere Stellsignale, an mindestens eine Baugruppe der Gasturbine übermittelt. Das oder jedes Anbaugerät (14) weist mindestens eine Schnittstelle zur Ankopplung der oder jeder Baugruppe auf.

Erfindungsgemäß weist das oder jedes Anbaugerät (14) ein Basiselement (21) und ein Aufnahmeelement (22) auf, wobei in das Basiselement (21) die oder jede Schnittstelle zur Ankopplung der oder jeder Baugruppe der Gasturbine integriert ist, wobei in das Aufnahmeelement (22) mindestens eine Einrichtung zur Signalverarbeitung integriert ist, und wobei das Aufnahmeelement (22) über das Basiselement (21) lösbar mit der Gasturbine verbunden ist (Fig. 1).

## Beschreibung

Die Erfindung betrifft eine Gasturbine nach dem Oberbegriff des Patentanspruchs 1. Des weiteren betrifft die Erfindung ein Anbaugerät für eine Gasturbine nach dem Oberbegriff des Patentanspruchs 11 sowie als spezielle Ausführungsform eines Anbaugeräts einen Triebwerksregler für ein Flugzeugtriebwerk nach dem Oberbegriff des Patentanspruchs 15.

Zur Optimierung der Leistung von Gasturbinen, insbesondere von Flugzeugtriebwerken, wird während des Betriebs der Gasturbine die Funktion derselben überwacht und/oder gesteuert und/oder geregelt. So sind nach dem Stand der Technik an Gasturbinen eine Vielzahl von Sensoren angeordnet, um Messwerte von Betriebsparametern der Gasturbine zu ermitteln. Weiterhin sind der Gasturbine Aktuatoren zugeordnet, um die Betriebsweise der Gasturbine zu beeinflussen. Die von den Sensoren gelieferten Messwerte werden an Anbaugeräte übermittelt, wobei die Anbaugeräte die Messsignale verarbeiten und aus denselben Stellsignale für die Aktuatoren der Gasturbine generieren. Bei solchen Anbaugeräten für Gasturbinen kann es sich zum Beispiel um eine Regeleinrichtung oder eine Kraftstoffzumesseinrichtung handeln.

Nach dem Stand der Technik ist ein derartiges Anbaugerät als eine Einheit an einer Gasturbine befestigt und über mehrere Schnittstellen mit den Baugruppen der Gasturbine, nämlich mit den Sensoren und Aktuatoren derselben, verbunden. Von den Baugruppen, nämlich von den Sensoren, abführende Signal- und Stromversorgungsleitungen, nachfolgend kurz Signalleitungen genannt, und zu den Baugruppen, nämlich zu den Aktuatoren, führende Signalleitungen sind nach dem Stand der Technik an derartige Anbaugeräte allseitig hingeführt. Bei aus dem Stand der Technik bekannten Anbaugeräten sind demnach die Schnittstellen in eine Oberseite, eine Unterseite sowie Seitenwandungen der Anbaugeräte integriert. Zur Wartung des Anbaugeräts muss dasselbe nach dem Stand der Technik als Einheit bzw. als Ganzes von der Gasturbine demontiert werden, wobei nach der Demontage des Anbaugeräts die Signalleitungen bzw. die den Signalleitungen zugeordneten Steckverbindungen lose an der Gasturbine liegen.

Hiervon ausgehend liegt der vorliegenden Erfindung das Problem zu Grunde, eine neuartige Gasturbine und ein neuartiges Anbaugerät, insbesondere einen neuartigen Triebwerksregler, für eine Gasturbine, insbesondere für ein Flugzeugtriebwerk, zu schaffen.

Dieses Problem wird dadurch gelöst, dass die eingangs genannte Gasturbine durch die Merkmale des kennzeichnenden Teils des Patentanspruchs 1 weitergebildet ist.

Erfindungsgemäß weist das oder jedes Anbaugerät ein Basiselement und ein Aufnahmeelement auf, wobei in das Basiselement die oder jede Schnittstelle zur Ankopplung der oder jeder Baugruppe der Gasturbine integriert ist, wobei in das Aufnahmeelement mindestens eine Einrichtung zur Signalverarbeitung integriert ist, und wobei das Aufnahmeelement über das Basiselement lösbar mit der Gasturbine verbunden ist. Vorzugsweise ist das Basiselement als Basisplatte ausgebildet, wobei die Basisplatte fest bzw. dauerhaft mit der Gasturbine bzw. mit der oder jeder Baugruppe der Gasturbine verbunden ist. An der Gasturbine sind demnach wartungsfreie bzw. wartungsarme Bauteile fest montiert. In eine Unterseite der Basisplatte sind die Schnittstellen zur dauerhaften Ankopplung der Baugruppen der Gasturbine integriert. In eine Oberseite der Basisplatte sind hingegen Schnittstellen zur lösbaren Ankopplung des Aufnahmeelements integriert, wobei das Aufnahmeelement in seiner Position relativ zum Basiselement über Zentrierstifte geführt ist. In das Aufnahmeelement sind die wartungsanfälligeren Bauteile, insbesondere Einrichtungen zur Signalverarbeitung, integriert.

Im Sinne der Erfindung wird demnach vorgeschlagen, ein Anbaugerät für eine Gasturbine aus zwei funktional voneinander getrennten Elementen aufzubauen. Ein erstes Element des Anbaugeräts ist das Basiselement. In das Basiselement sind alle Schnittstellen zur Ankopplung der Baugruppen der Gasturbine, insbesondere der Sensoren sowie der Aktuatoren der Gasturbine, integriert. Das Basiselement ist als wartungsarmes Bauteil dauerhaft mit der Gasturbine verbunden. Ein zweites Element der Gasturbine ist das Aufnahmeelement, wobei das Aufnahmeelement die Signalverarbeitungseinrichtungen aufweist. Das Aufnahmeelement ist lösbar mit dem Basiselement und damit lösbar mit der Gasturbine verbunden. Das Basiselement bildet demnach ein Interface zur Ankopplung der in das Aufnahmeelement integrierten Signalverarbeitungseinrichtungen an die Sensoren sowie Aktuatoren der Gasturbine. Zur Wartung des Anbaugeräts wird lediglich das Aufnahmeelement von der Gasturbine gelöst, das Basiselement hingegen verbleibt an der Gasturbine, so dass die Verbindungen zwischen dem Basiselement und den Sensoren sowie Aktuatoren und sonstigen Baugruppen der Gasturbine nicht gelöst werden müssen. Dies erleichtert einerseits den Montage- sowie Demontageaufwand für die Signalverarbeitungseinrichtungen des Anbaugeräts und andererseits sind die Schnittstellen, die zu den Baugruppen der Gasturbine führen, über die Basisplatte strukturiert und damit einfach für Wartungsarbeiten zugänglich.

Das erfindungsgemäße Anbaugerät für eine Gasturbine ist durch die Merkmale des Patentanspruchs 11 gekennzeichnet. Ein erfindungsgemäßer Treibwerksregler ist in Patentanspruch 15 definiert.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: einen Ausschnitt einer erfindungsgemäßen Gasturbine, nämlich eines Flugzeugtriebwerks, mit einem erfindungsgemäßen Anbaugerät in perspektivischer Seitenansicht;
- Fig. 2:: ein Basiselement des erfindungsgemäßen Anbaugeräts in einer Ansicht von unten;
- Fig. 3:: das Basiselement gemäß Fig. 2 in einer Ansicht von oben;
- Fig. 4:: das Basiselement gemäß Fig. 2, 3 in einer Seitenansicht;
- Fig. 5:: das Basiselement gemäß Fig. 2 bis 4 in einer gegenüber Fig. 4 um 90° gedrehten Seitenansicht;
- Fig. 6:: ein Aufnahmeelement des erfindungsgemäßen Anbaugeräts in einer Ansicht von unten;
- Fig. 7:: das Aufnahmeelement gemäß Fig. 2 in einer Ansicht von oben mit demontierter Deckplatte;
- Fig. 8:: das Aufnahmeelement gemäß Fig. 6, 7 in einer Seitenansicht; und
- Fig. 9:: das Aufnahmeelement gemäß Fig. 6 bis 8 in einer gegenüber Fig. 8 um 90° gedrehten Seitenansicht.

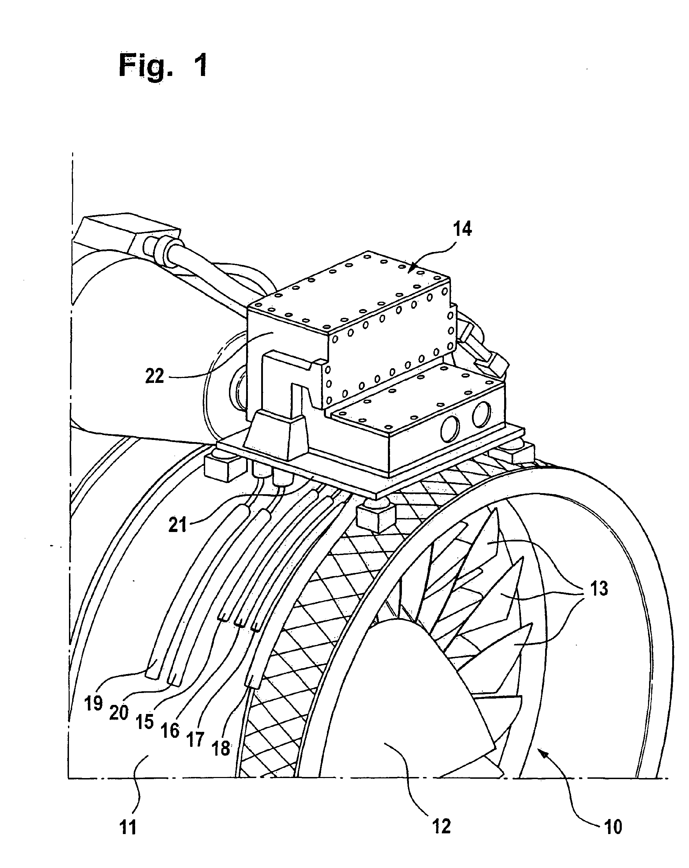

Nachfolgend wird die Erfindung unter Bezugnahme auf Fig. 1 bis 9 in größerem Detail erläutert. Obwohl das Ausführungsbeispiel gemäß Fig. 1 bis 9 als Anbaugerät einen Triebwerksregler eines Flugzeugtriebwerks zeigt, ist die hier vorliegende Erfindung für alle anderen Anbaugeräte einer Gasturbine, so zum Beispiel für eine Kraftstoffzumesseinheit eines Flugzeugtriebwerks, einsetzbar.

Fig. 1 zeigt ein Flugzeugtriebwerk 10 im Ausschnitt in einer perspektivischen Ansicht von vorne. So ist in Fig. 1 ein Gehäuse 11 des Flugzeugtriebwerks 10 sowie ein Lüfterrotor 12 mit mehreren Lüfterschaufeln 13 erkennbar. Auf das Gehäuse 11 des Flugzeugtriebwerks 10 ist ein erfindungsgemäßes Anbaugerät 14, welches im gezeigten Ausführungsbeispiel als Triebwerksregler ausgeführt ist, angebaut.

Das als Triebwerksregler ausgebildete Anbaugerät 14 dient der Regelung der Leistung des Flugzeugtriebwerks 10. Zur Leistungsregelung des Flugzeugtriebwerks 10 müssen dem als Triebwerksregler ausgebildeten Anbaugerät 14 von Sensoren Messsignale zur Verfügung gestellt werden, wobei das Anbaugerät 14 diese Messsignale intern weiterverarbeitet und daraus Stellsignale für Aktuatoren des Flugzeugtriebwerks 10 erzeugt. So sind in Fig. 1 schematisiert pneumatische Signalleitungen 15, 16 und 17 gezeigt, die am Flugzeugtriebwerk 10 Luftdrücke abgreifen und diese Luftdrücke dem Anbaugerät 14 zur Verfügung stellen. Weiterhin ist in Fig. 1 schematisiert eine Signalleitung 18 gezeigt, die elektrische und/oder optische Messsignale und/oder Steuersignale von Baugruppen des Flugzeugtriebwerks 10 an das Anbaugerät 14 übermittelt bzw. vom Anbaugerät 14 an die Baugruppen des Flugzeugtriebwerks 10 weiterleitet. Weiterhin zeigt Fig. 1 stark schematisiert Kraftstoffleitungen 19, 20 zur Zuführung bzw. Abführung von Kraftstoff, nämlich Kerosin, in das bzw. aus dem Anbaugerät 14. Obwohl auf die Kraftstoffleitungen 19, 20 und die Funktion des Kraftstoffs innerhalb des Anbaugeräts 14 später noch eingegangen wird, soll an dieser Stelle bereits darauf hingewiesen werden, dass der Kraftstoff im Anbaugerät 14 der Kühlung desselben dient. Die an den Komponenten des Anbaugeräts 14 auftretende Wärme muss abgeführt werden, damit die für eine optimierte Lebensdauer der elektrischen bzw. elektronischen Komponenten des Anbaugeräts 14 zulässige Höchsttemperatur nicht überschritten wird. Als Kühlmittel wird Kraftstoff, nämlich Kerosin, verwendet.

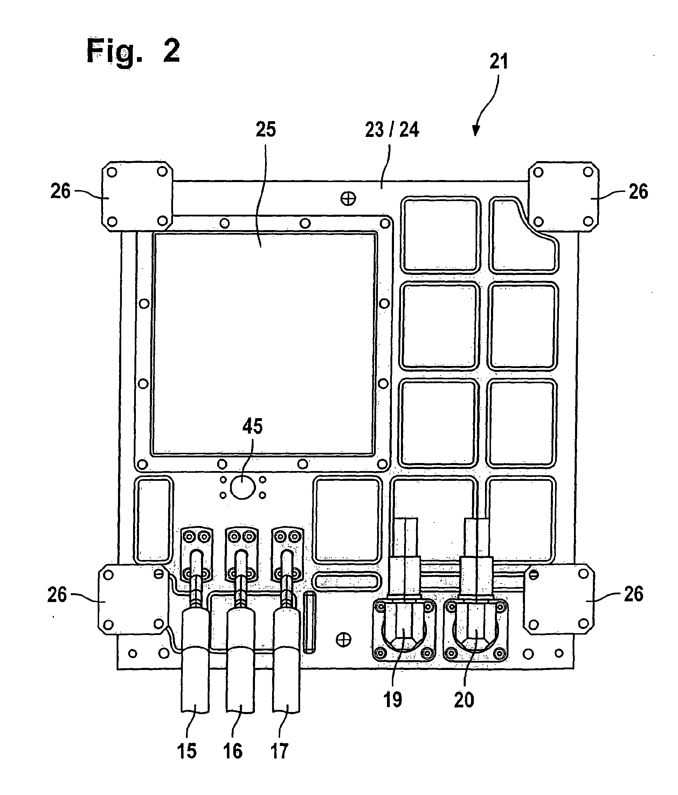

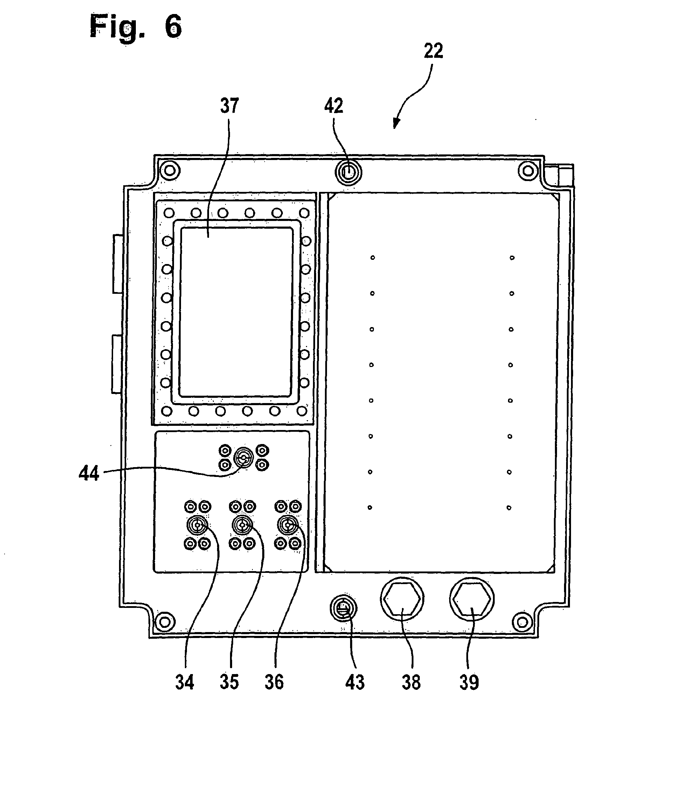

Es liegt nun im Sinne der hier vorliegenden Erfindung, dass das Anbaugerät 14 ein Basiselement 21 sowie ein Aufnahmeelement 22 aufweist. Das Basiselement 21 ist in Fig. 2 bis 5 in vier unterschiedlichen Ansichten gezeigt. Fig. 6 bis 9 zeigen hingegen vier unterschiedliche Ansichten des Aufnahmeelements 22. Erfindungsgemäß sind in das Basiselement alle Schnittstellen zur Ankopplung der Baugruppen des Flugzeugtriebwerks 10 integriert. Das Basiselement 21 ist mit dem Gehäuse 11 des Flugzeugtriebwerks 10 fest verbunden. Das Aufnahmeelement 22 umfasst die Signalverarbeitungseinrichtungen des Anbaugeräts 14, nämlich im gezeigten Ausführungsbeispiel die Signalverarbeitungseinrichtungen des Triebwerksreglers. Das Aufnahmeelement 22 ist erfindungsgemäß über das Basiselement 21 lösbar mit dem Flugzeugtriebwerk 10 bzw. den Sensoren, Aktuatoren sowie ggf. weiteren Baugruppen des Flugzeugtriebwerks 10 verbunden. Das Basiselement 21 bildet demnach ein Interface, an dem die pneumatischen Signalleitungen 15, 16 und 17, die Signalleitung 18 mit elektrischen und/oder optischen Signalleitungen sowie die Kraftstoffleitungen 19, 20 fest angreifen. Auf dieses als Interface ausgebildete Basiselement 21 ist das Aufnahmeelement 22 lösbar anbringbar.

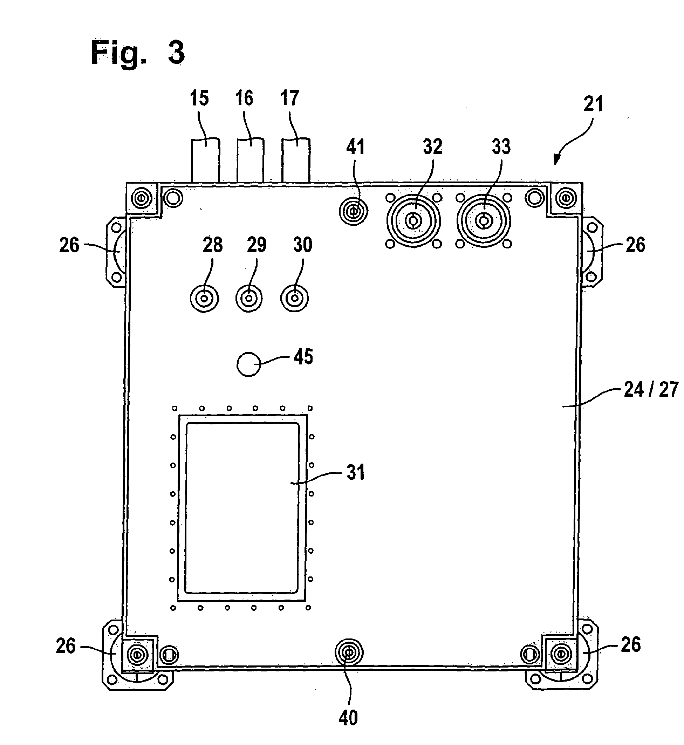

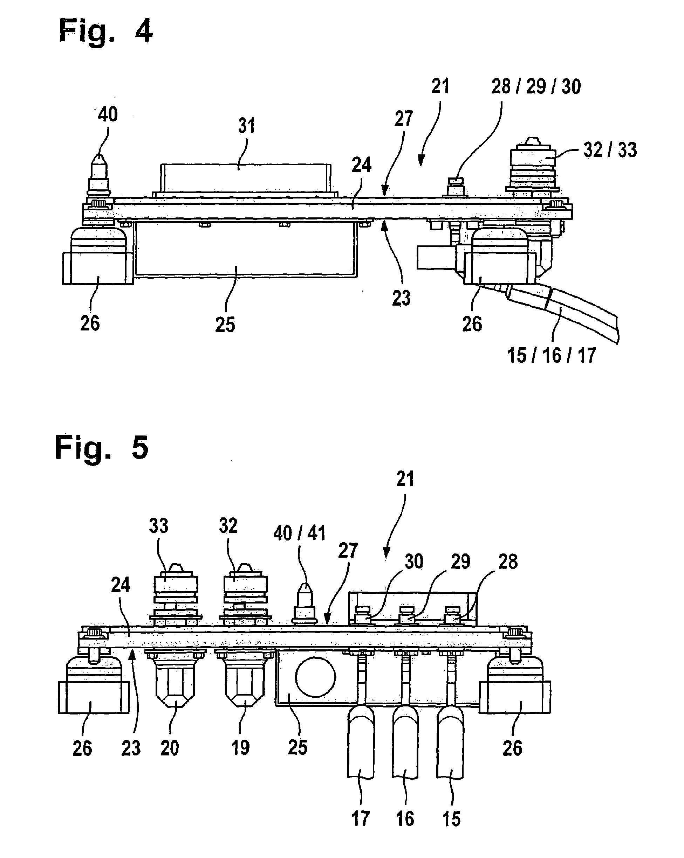

Wie bereits erwähnt, zeigen Fig. 2 bis 5 vier unterschiedliche Ansichten des Basiselements 21. Fig. 2 zeigt eine Ansicht von unten auf das Basiselement 21, Fig. 3 zeigt eine Ansicht von oben auf das Basiselement 21 und Fig. 4 und 5 zeigen zwei unterschiedliche Seitenansichten desselben.

Das Basiselement ist als Basisplatte ausgebildet. An eine Unterseite 23 eines plattenförmigen Grundkörpers 24 sind die pneumatischen Signalleitungen 15, 16 und 17 sowie die Kraftstoffleitungen 19 und 20 herangeführt. Weiterhin wird die Signalleitung 18, welche die elektrischen und/oder optischen Signalleitungen umfasst, an die Unterseite 23 des Grundkörpers 24 herangeführt. Die Signalleitung 18 ist jedoch in Fig. 2 bis 5 nicht dargestellt, sondern lediglich eine sogenannte Sammelbox 25 für die elektrischen und/oder optischen Leitungsanschlüsse der Signalleitung 18. Die oben erwähnten, an die Unterseite 23 des Basiselements 21 herangeführten Leitungen bleiben dauerhaft mit dem Basiselement 21 bzw. der Basisplatte verbunden.

Die Befestigung der Basisplatte 21 mit dem Gehäuse 11 des Flugzeugtriebwerks 10 erfolgt über als Schwingungsdämpfer ausgebildete Befestigungsmittel 26, wobei in jeder Ecke des plattenförmigen Grundkörpers 24 ein derartiges Befestigungsmittel 26 angeordnet ist. Zwischen einer unteren Auflagefläche der Befestigungsmittel 26 auf dem Gehäuse 11 des Flugzeugtriebwerks 10 und dem plattenförmigen Grundkörper 24 des Basiselements 21 wird ein gut zugänglicher Freiraum zur Heranführung der Leitungen 15 bis 20 geschaffen.

Auf einer Oberseite 27 des Grundkörpers 24 des Basiselements 21 werden Anschlüsse bzw. Schnittstellen bereitgestellt, in die das Aufnahmeelement 22 des Anbaugeräts 14 mit Gegenanschlüssen eingesteckt werden kann. So zeigt Fig. 3 auf der Oberseite 27 des plattenförmigen Grundkörpers 24 Druckanschlüsse 28, 29 und 30, an denen die über die pneumatischen Signalleitungen 15, 16 und 17 bereitgestellten Drücke vom Aufnahmeelement 22 des Anbaugeräts 14 abgreifbar sind. Weiterhin ist auf der Oberseite 27 des plattenförmigen Grundkörpers 24 eine Steckereinrichtung 31 mit elektrischen und/oder optischen Kontakten bereitgestellt, um die über die Signalleitung 18 bereitgestellten optischen und/oder elektrischen Signale abzugreifen. Kraftstoffanschlüsse 32 und 33 stellen ein selbstschließendes Ventil an der Oberseite 27 des plattenförmigen Grundkörpers 24 des Basiselements 21 bereit, in die korrespondierende Ventile des Aufnahmeelements 22 eingesteckt werden können, um den über die Kraftstoffleitungen 19 und 20 herangeführten Kraftstoff für Kühlzwecke in das Aufnahmeelement 22 hineinzuleiten und anschließend aus demselben herauszuführen.

Die Gegenanschlüsse bzw. Schnittstellen des Aufnahmeelements 22, mit welchen das Aufnahmeelement 22 in die Druckanschlüsse 28, 29, 30, die Steckereinrichtung 31 sowie die Kraftstoffanschlüsse 32 und 33 einsteckbar ist, zeigt Fig. 6. So zeigt Fig. 6 das Aufnahmeelement 22 von unten. Druckanschlüsse 34, 35 und 36 bilden die Gegenanschlüsse für die Druckanschlüsse 28, 29 und 30 des Basiselements 21. Eine Steckereinrichtung 37 mit elektrischen und/oder optischen Kontakten bildet ein Gegenelement für die Steckereinrichtung 31 des Basiselements 21. Die Steckereinrichtungen 31 bzw. 37 sind insbesondere als sogenannte Kombistecker mit Kontakten für optische und elektrische Signale, insbesondere elektrische Datensignale und elektrische Stromversorgungssignale, ausgebildet. Hierdurch ist einerseits die Anzahl der sogenannten Pins in der Steckereinrichtung nahezu beliebig erweiterbar, andererseits sind alle Pins in eine gemeinsame Steckereinrichtung integrierbar.

Entsprechend sind in die Unterseite des Aufnahmeelements 22 auch Kraftstoffanschlüsse 38 und 39 integriert, die in die Kraftstoffanschlüsse 32 und 33 auf der Oberseite 27 des Basiselements 21 eingreifen. Insofern ist durch einfaches Aufstecken des Aufnahmeelements 22 auf die Oberseite 27 des Basiselements 21 in einem Schritt eine Verbindung des Aufnahmeelements 22 mit dem Basiselement 21 und damit mit allen Sensoren, Aktuatoren sowie sonstigen Baugruppen des Flugzeugtriebwerks 11 herstellbar. Das Basiselement 21 stellt demnach ein Interface bereit, das fest mit dem Flugzeugtriebwerk 10 bzw. mit dem Aktuatoren, Sensoren und sonstigen Baugruppen des Flugzeugtriebwerks verbunden ist, und das andererseits eine einfache und schnelle lösbare Verbindung des Aufnahmeelements 22 mit dem Basiselement 21 ermöglicht. Um das Aufnahmeelement 22 positionsgenau und sicher auf das Basiselement 21 aufstecken zu können, sind in das Basiselement 21 zwei Zentrierstifte 40, 41 integriert. Die Zentrierstifte 40, 41 des Basiselements 21 wirken mit korrespondierenden Ausnehmungen 42 und 43 des Aufnahmeelements 22 zusammen.

In Fig. 6 ist neben den Druckanschlüssen 34, 35 und 36 ein weiterer Druckanschluss 44 gezeigt. An diesem Druckanschluss 44 ist der Umgebungsdruck abgreifbar. Zur Bereitstellung des Umgebungsdrucks am Druckanschluss 44 ist in das Basiselement 21 eine den plattenförmigen Grundkörper 24 durchdringende Ausnehmung 45 eingebracht.

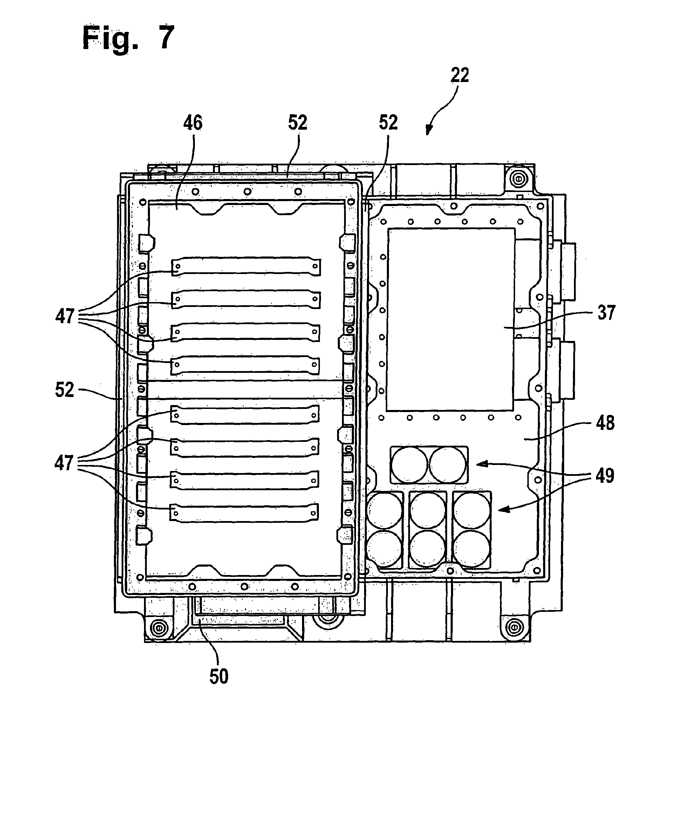

Fig. 7 zeigt das Aufnahmeelement 22 des als Triebwerkregler ausgebildeten Anbaugeräts 14 in einer Ansicht von oben, wobei eine nicht-dargestellte Deckplatte demontiert ist, um die Sicht auf die in dem Aufnahmeelement 22 positionierten Baugruppen zu ermöglichen. So ist gemäß Fig. 7 das Aufnahmeelement 22 in zwei Gehäuseabschnitte unterteilt, nämlich in ein Kartengehäuse 46 und in ein Sensorgehäuse 48. In das Kartengehäuse 46 sind eine Vielzahl von Platinen 47 integriert. Im Sensorgehäuse 48 sind Drucksensoren 49 angeordnet, um die an den Druckanschlüssen 34, 35, 36 und 44 bereitgestellten Drücke auszuwerten. Die Platinen 47 tragen die eigentlichen Signalverarbeitungseinrichtungen des als Triebwerksregler ausgebildeten Anbaugeräts 14. Mit den auf den Platinen 47 integrierten elektrischen bzw. elektronischen Baugruppen werden die erfassten Messwerte verarbeitet und es werden aus den Messwerten Stellsignale generiert, um letztendlich die Leistung des Flugzeugtriebwerks 10 zu regeln.

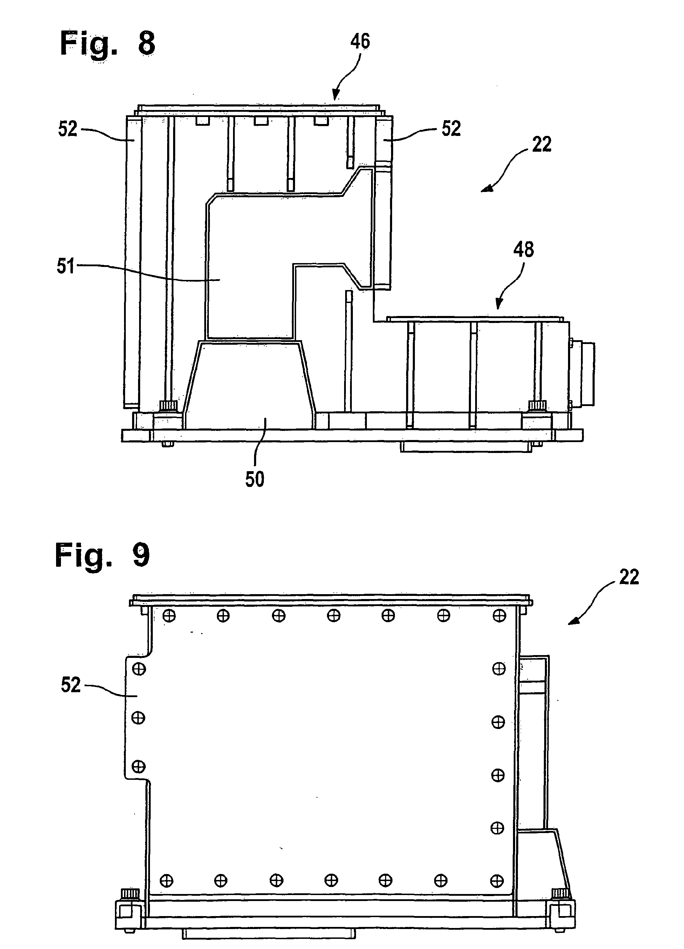

Wie bereits mehrfach erwähnt, ist das als Triebwerksregler ausgebildete Anbaugerät 14 auf dem Flugzeugtriebwerk 10 befestigt und damit hohen Temperaturen ausgesetzt. Die im Aufnahmeelement 22 des Anbaugeräts 14 integrierte Elektronik, insbesondere die Platinen 47, sind stark temperaturempfindlich und es muss demnach eine ausreichende Wärmeabführung bzw. Kühlung bereitgestellt werden. Der an den Kraftstoffanschlüssen 38 und 39 angegriffene Kraftstoff wird zur Kühlung durch das Aufnahmeelement 22 bewegt. So zeigen Fig. 7 und 8 einen Einlassbereich 50 eines Kraftstoffkanals 51, wobei der Kraftstoffkanal 51 letztendlich in einen Auslassbereich mündet. Das Kartengehäuse 46 ist von Wärmertauscherelementen 52 umgeben, um den Kraftstoff allseitig zur Gewährleistung einer möglichst großen Kühlung um das Kartengehäuse 46 herumzuführen.

Im Sinne der hier vorliegenden Erfindung wird eine völlig neue Konstruktion für ein Anbaugerät einer Gasturbine, insbesondere eines Flugzeugtriebwerks, geschaffen. Mit einem derartigen Anbaugerät kann der Montageaufwand sowie Wartungsaufwand am Anbaugerät und damit letztendlich am Flugzeugtriebwerk erheblich verringert werden. Die aufwendige Verlegung sowie Befestigung von Signalleitungen, die zu Sensoren, Aktuatoren und sonstigen Baugruppen des Flugzeugtriebwerks führen, kann reduziert werden, da die Basisplatte an der Gasturbine verbleibt. Nach der Demontage des Aufnahmeelements bleiben demnach alle Verbindungen der Basisplatte mit den Baugruppen des Flugzeugtriebwerks bestehen, wobei diese Verbindungen über die Oberseite der Basisplatte gut zugänglich sind. Hierdurch wird die Sicherheit und damit Zuverlässigkeit des Anbaugeräts und damit letztendlich der Gasturbine erhöht. Nach dem Stand der Technik konnten nämlich die Verbindungen, insbesondere die Steckverbindungen, die im Sinne der Erfindung dauerhaft mit der Basisplatte verbunden sind, leicht beschädigt werden, indem sich beim Lösen und Verbinden z. B. Pins der Steckverbindungen verbiegen. Dies konnte nach dem Stand der Technik zu einem Ausfall der Gasturbine führen. Diese Gefahr wird mit der hier vorliegenden Erfindung deutlich minimiert.

Die Erfindung kann für alle mechanischen, elektrischen, elektronischen sowie mechanotronischen Anbaugeräte an Gasturbinen, insbesondere an Flugzeugtriebwerken, verwendet werden. Es wird ein sogenanntes Plug and Play-Prinzip für Anbaugeräte an Flugzeugtriebwerken geschaffen. Alle elektrischen, pneumatischen, hydraulischen und/oder optischen Verbindungen werden über ein gemeinsames, steckbares Interface verbunden bzw. gelöst, wobei das Interface von einer Basisplatte des Anbaugeräts geschaffen wird, die dauerhaft mit dem Flugzeugtriebwerk verbunden ist.

## Patentansprüche

1. Gasturbine, insbesondere Flugzeugtriebwerk, mit mindestens einem an der Gasturbine befestigten Anbaugerät (14), wobei das oder jedes Anbaugerät (14) von mindestens einer Baugruppe der Gasturbine Signale, insbesondere Messsignale, empfängt, die Signale verarbeitet und Signale, insbesondere Stellsignale, an mindestens eine Baugruppe der Gasturbine übermittelt, und wobei das oder jedes Anbaugerät (14) mindestens eine Schnittstelle zur Ankopplung der oder jeder Baugruppe aufweist, **dadurch gekennzeichnet, dass** das oder jedes Anbaugerät (14) ein Basiselement (21) und ein Aufnahmeelement (22) aufweist, wobei in das Basiselement (21) die oder jede Schnittstelle zur Ankopplung der oder jeder Baugruppe der Gasturbine integriert ist, wobei in das Aufnahmeelement (22) mindestens eine Einrichtung zur Signalverarbeitung integriert ist, und wobei das Aufnahmeelement (22) über das Basiselement (21) lösbar mit der Gasturbine verbunden ist.

2. Gasturbine nach Anspruch 1, **dadurch gekennzeichnet, dass** das Basiselement (21) als Basisplatte ausgebildet ist, wobei in die Basisplatte die o-der jede Schnittstelle zur Ankopplung der oder jeder Baugruppe der Gasturbine integriert ist.

3. Gasturbine nach Anspruch 1 oder 2, **dadurch gekennzeichnet, dass** in das Basiselement (21) mehrere Schnittstellen zur Ankopplung mehrerer Baugruppen der Gasturbine integriert sind, nämlich hydraulische und/oder pneumatische und/oder elektrische und/oder optische Schnittstellen.

4. Gasturbine nach einem oder mehreren der Anspruche 1 bis 3, **dadurch gekennzeichnet, dass** das Basiselement (21) fest bzw. dauerhaft mit der Gasturbine bzw. mit der oder jeder Baugruppe der Gasturbine verbunden ist.

5. Gasturbine nach einem oder mehreren der Ansprüche 1 bis 4, **dadurch gekennzeichnet, dass** in das Basiselement (21) Anschlüsse zur Zuführung und Ableitung eines Kühlmittels, insbesondere Kraftstoffanschlüsse, integriert sind.

6. Gasturbine nach einem oder mehreren der Ansprüche 1 bis 5, **dadurch gekennzeichnet, dass** das Basiselement (21) ein Interface zur lösbaren Ankopplung des Aufnahmeelements (22), insbesondere der oder jeder Einrichtung zur Signalverarbeitung, an die Gasturbine, insbesondere an die o-der jede Baugruppe der Gasturbine, bildet.

7. Gasturbine nach einem oder mehreren der Ansprüche 1 bis 6, **dadurch gekennzeichnet, dass** in eine Unterseite (23) des Basiselements (21) Schnittstellen zur dauerhaften Ankopplung der Baugruppen der Gasturbine an das Basiselement integriert sind, und dass in eine Oberseite (27) des Basiselements Schnittstellen zur lösbaren Ankopplung des Aufnahmeelements an das Basiselement (21) integriert sind, wobei das Aufnahmeelement (22) in seiner Position relativ zum Basiselement über Zentrierstifte (40, 41) geführt ist.

8. Gasturbine nach einem oder mehreren der Ansprüche 1 bis 7, **dadurch gekennzeichnet, dass** in das Aufnahmeelement (22) elektronische Auswerteeinrichtungen (47) und Sensoreinrichtungen (49) integriert sind.

9. Gasturbine nach einem oder mehreren der Ansprüche 1 bis 8, **dadurch gekennzeichnet, dass** das Anbaugerät (14) als Gasturbinenregler oder als Kraftstoffzumesseinrichtung ausgebildet ist.

10. Anbaugerät für eine Gasturbine, insbesondere für ein Flugzeugtriebwerk, wobei das Anbaugerät von mindestens einer Baugruppe der Gasturbine Signale, insbesondere Messsignale, empfängt, die Signale verarbeitet und Signale, insbesondere Stellsignale, an mindestens eine Baugruppe der Gasturbine übermittelt, und wobei das Anbaugerät (14) mindestens eine Schnittstelle zur Ankopplung der oder jeder Baugruppe aufweist, **gekennzeichnet durch** ein Basiselement (21) und ein Aufnahmeelement (22), wobei in das Basiselement (21) die oder jede Schnittstelle zur Ankopplung der oder jeder Baugruppe der Gasturbine integriert ist, wobei in das Aufnahmeelement (22) mindestens eine Einrichtung zur Signalverarbeitung integriert ist, und wobei das Aufnahmeelement (22) über das Basiselement (21) lösbar mit der Gasturbine verbunden ist.

11. Anbaugerät nach Anspruch 10, **dadurch gekennzeichnet, dass** das Basiselement (21) als Basisplatte ausgebildet ist, wobei die Basisplatte fest bzw. dauerhaft mit der Gasturbine bzw. mit der oder jeder Baugruppe der Gasturbine verbunden ist.

12. Anbaugerät nach Anspruch 11, **dadurch gekennzeichnet, dass** in eine Unterseite (23) der Basisplatte die Schnittstellen zur dauerhaften Ankopplung der Baugruppen der Gasturbine an die Basisplatte integriert sind, und dass in eine Oberseite (27) des Basisplatte Schnittstellen zur lösbaren Ankopplung des Aufnahmeelements (22) an die Basisplatte integriert sind.

13. Anbaugerät nach einem oder mehreren der Ansprüche 10 bis 12, **dadurch gekennzeichnet, dass** die Schnittstellen als hydraulische und/oder pneumatische und/oder elektrische und/oder optische Schnittstellen ausgebildet sind.

14. Anbaugerät nach einem oder mehreren der Ansprüche 11 bis 13, **dadurch gekennzeichnet, dass** die Basisplatte ein Interface zur lösbaren Ankopplung des Aufnahmeelements (21), insbesondere der oder jeder Einrichtung zur Signalverarbeitung, an die Gasturbine bildet.

15. Triebwerksregler für ein Flugzeugtriebwerk, wobei der Triebwerksregler von mehreren Baugruppen des Flugzeugtriebwerks Signale, insbesondere Messsignale, empfängt, die Signale verarbeitet und Signale, insbesondere Stellsignale, an mehrere Baugruppen des Flugzeugtriebwerks übermittelt, und wobei der Triebwerksregler mehrere Schnittstellen zur Ankopplung der Baugruppen aufweist, **gekennzeichnet durch** ein Basiselement (21) und ein Aufnahmeelement (22), wobei in das Basiselement (21) die Schnittstellen zur Ankopplung der Baugruppen des Flugzeugtriebwerks integriert ist, wobei in das Aufnahmeelement (22) Signalverarbeitungseinrichtungen integriert ist, und wobei das Aufnahmeelement (22) über das Basiselement (21) lösbar mit dem Flugzeugtriebwerk verbunden ist.

16. Triebwerksregler nach Anspruch 15, **dadurch gekennzeichnet, dass** das Basiselement (21) als Basisplatte ausgebildet ist, wobei die Basisplatte fest bzw. dauerhaft mit den Baugruppen des Flugzeugtriebwerks verbunden ist.

17. Triebwerksregler nach Anspruch 16, **dadurch gekennzeichnet, dass** in eine Unterseite (23) der Basisplatte die Schnittstellen zur dauerhaften Ankopplung der Baugruppen des Flugzeugtriebwerks an die Basisplatte integriert sind, und dass in eine Oberseite (27) des Basisplatte Schnittstellen zur lösbaren Ankopplung des Aufnahmeelements (22) an die Basisplatte integriert sind.

18. Triebwerksregler nach einem oder mehreren der Ansprüche 15 bis 17, **dadurch gekennzeichnet, dass** das Basiselement (21) ein Interface zur lösbaren Ankopplung der Signalverarbeitungseinrichtungen des Aufnahmeelements (22) an die Baugruppen der Gasturbine bildet, wobei das Aufnahmeelement (22) in seiner Position relativ zum Basiselement (21) über Zentrierstifte (40, 41) geführt ist.
